# EUROPÄISCHE PATENTSCHRIFT

(11) **EP 0 989 206 B1**
(45) Veröffentlichungstag und Bekanntmachung des Hinweises auf die Patenterteilung: **13.11.2002**
(21) Anmeldenummer: 99117862.5
(22) Anmeldetag: 10.09.1999
(51) Int. Cl.: C25B 9/00

(54) **Elektrolysezelle und deren Verwendung**
Electrolysis cell and use thereof
Cellule d'électrolyse et son utilisation

(30) Priorität: 25.09.1998 DE 19844059
(43) Veröffentlichungstag der Anmeldung: 29.03.2000
(73) Patentinhaber: Degussa AG, 40474 Düsseldorf (DE)
(72) Erfinder: Lehmann, Thomas, Dr., 63505 Langenselbold (DE); Stenner, Patrick, 63452 Hanau (DE); Küver, Andreas, Dr., 63457 Hanau (DE)

(56) Entgegenhaltungen:
- EP-A- 0 718 903
- EP-A- 0 800 853
- WO-A-92/15121
- US-A- 5 972 195

## Beschreibung

Die Erfindung richtet sich auf eine Elektrolysezelle zur Durchführung chemischer Reaktionen. Die Elektrolysezelle umfaßt einen mit elektrisch leitfähigen Füllkörpern gefüllten Elektrolytraum, einen Gasraum und eine dazwischen angeordnete Gasdiffusionselektrode. Ein weiterer Gegenstand richtet sich auf die Verwendung der Elektrolysezelle, zur Oxidation oder Reduktion von im Elektrolyt gelösten Komponenten, insbesondere zur Überführung von Cystin oder Cystinderivaten in Cystein oder Cysteinderivate.

Es ist bekannt, chemische Reaktionen, insbesondere Oxidationen und Reduktionen, in einer Elektrolysezelle unter Einsatz einer Gasdiffusionselektrode durchzuführen. So lehrt die NL-A 9101022 eine Elektrolysezelle, welche einen Gasraum, einen Elektrolytraum und eine dazwischen angeordnete Gasdiffusionselektrode umfaßt und deren Elektrolytraum mit elektrisch leitfähigen Füllstoffkörpern, welche als Festbettelektrode wirken, gefüllt ist. Die zu verwendende Gasdiffusionselektrode, welche einen üblichen Aufbau aufweist, steht in direktem Kontakt mit dem Elektrolytraum. Unter Verwendung eines sauren Elektrolyten und einer Wasserstoff-Verzehranode läßt sich ein im Elektrolyt gelöstes Fe(III)-Salz zum entsprechenden Fe(II)-Salz reduzieren. In analoger Weise lassen sich anorganische und organische Verbindungen unter Verwendung einer Sauerstoff-Verzehrkathode oxidieren, beispielsweise Fe(II)-Salze zu Fe(III)-Salzen oder Glucose zu Gluconsäure. Durch die Festbettelektrode im Elektrolytraum wird die Umsetzung gegenüber der Verwendung einer üblichen flächigen Elektrode maßgeblich gesteigert. Diverse Einflußgrößen, wie die Partikelgröße des Festbetts und die Elektrolytkonzentration, werden in J. Appl. Electrochemistry 28 (1998) 343-349 beschrieben. Ein Nachteil dieser Elektrolysezelle besteht darin, daß es wegen der Starrheit der auf einem starren Stützgitter aufliegenden Gasdiffusionselektrode (GDE), und der durch die Strömung des Elektrolyts bedingten Bewegung der Partikel des Festbetts zu Kontaktabrissen kommt, wodurch die Effizienz gemindert wird. Ein weiterer Nachteil besteht darin, dass die Feuchtigkeitsverteilung zwischen dem Gasraum und dem Elektrolytraum problematisch ist und eine Flutung der Poren der Gasdiffusionselektrode auf der Seite des Gasraums den Durchtritt des Gases zur katalytisch wirksamen Schicht behindert, so dass eine höhere Betriebsspannung resultiert beziehungsweise der Elektrolyseprozeß zum Erliegen kommt. Schließlich kommt es durch den direkten Kontakt des Elektrolyts mit darin enthaltenen zu reduzierenden oder zu oxidierenden Verbindungen mit der katalytisch wirksamen Schicht der Gasdiffusionselektrode leicht zu Vergiftungserscheinungen und damit zu einem Leistungsabfall und kurzer Standzeit der GDE.

Das Problem des durch den hydraulischen Druck des Elektrolyten verursachten Flüssigkeitsdurchtritts durch eine Gasdiffusionselektrode wird in der elektrochemischen Zelle gemäß EP-A 0 717 130, welche zwei durch eine Ionenaustauschermembran getrennte Elektrolyträume, jedoch keine Festbettelektrode, umfaßt, durch die Ausbildung des Gasraums in Form von kaskadenförmig übereinanderliegenden Gastaschen, die voneinander getrennt und zum Elektrolyten nach unten offen sind, gelöst. Diese Ausbildung ist aber technisch aufwendig und löst auch nicht das Problem der Vergiftung der Katalysatorschicht der GDE.

Das Problem der Deaktivierung der Katalysatorschicht der GDE in einer zwei Elektrolytkammern und eine GDE nebst Gaskammer umfassenden Elektrolysezelle läßt sich gemäß EP-A 0 522 382 durch Verwendung einer mit der katalytischen Schicht der H₂-verzehrenden GDE direkt in Kontakt gebrachten Kationenaustauschermembran vermeiden. In der in diesem Dokument beschriebenen Zelle wird die Membran nur durch den Druck des Elektrolyts und/oder durch ein federndes Element im an die GDE grenzenden Elektrolytraum auf die GDE gedrückt. Es sind auch Zellen bekannt, deren Gasdiffusionselektrode auf der Katalysatorschicht eine unter Druck und Temperatur auflaminierte Ionenaustauschermembran aufweisen - siehe zum Beispiel US-Patent 4,399,009. In beiden zitierten Dokumenten wird keine Festbettelektrode verwendet. Wie die Erfinder der vorliegenden Anmeldung unter Einsatz einer Zelle, welche eine Festbettelektrode und eine H₂-verzehrende Gasdiffusionsanode mit einer elektrolytseitig aufgepressten Ionenaustauschermembran umfaßte, feststellten, kommt es bei üblicher Bauart des Gasraums hinter der GDE leicht zur Delaminierung der Ionenaustauschermembran und damit zu Kontaktabbrüchen und Minderung der Stromausbeute.

Aus der EP-A 0 800 853 ist ein Verfahren und eine Elektrolysezelle zur Reinigung von Gasen bekannt, wobei die Zelle eine Festbettelektrode und eine mittels eines Separators davon abgetrennte Gasdiffusionselektrode (GDE) umfaßt. Die Kontaktierung der GDE erfolgt über mehrere auf der Elektrode angeordnete Kontaktierstreifen aus einem Edelmetall oder Ventilmetall, wie Tantal. Als weitere Kontaktiermöglichkeit wird vorgeschlagen, den Gasraum mit Graphitkugeln zu füllen, damit die Elektrode gleichmäßig über die Fläche verteilt kontaktiert wird; der elektrische Anschluß erfolgt dann mittels einer Elektrodenendplatte, welche mit den Graphitkugeln in Verbindung steht. Es wurde nun festgestellt, dass es im Dauerbetrieb der in diesem Dokument beschriebenen Gasreinigung, wobei der Elektrolyt und das Gas im Gegenstrom durch den Katholytraum geleitet werden, infolge auftretender Delaminierung einer in üblicher Weise auf die Katalyseschicht der GDE thermisch aufgepressten Ionenaustauschermembran zu erheblichen Betriebsstörungen und Minderung der Stromausbeute kommt.

Das US-Patent 4,876,115 lehrt eine Brennstoffzelle, umfaßt zwei Gasdiffusionselektroden und eine dazwischen angeordnete Membran aus einem festen polymeren Elektrolyten. Die Herstellung der Zelle umfaßt zwecks Ausbildung der Membran das Aufsprühen einer Lösung des Membranmaterials, wie Nafion® (E.I. DuPont), auf die Katalysatorseite einer Gasdiffusionselektrode und Entfernen des Lösungsmittels. Die Zelle umfaßt keinen mit einer Festbettelektrode versehenen Elektrolytraum.

Gemäß US-Patent 5,106,433 erfolgt die Elektroreduktion von Cystin und Derivaten in Gegenwart einer stickstoffhaltigen Base, wie Ammoniak, unter Verwendung einer zwei Elektrolytkammern umfassenden Zelle mit einer Kathode mit hoher Oberfläche, etwa einem Kohlenstoffvlies. Nachteilig ist der Aufwand für die Rückgewinnung der N-haltigen Base. Ein weiterer Nachteil besteht im Erfordernis von zwei Elektrolytkreisläufen. Im Verfahren der WO 97/42358 wird N-Acetylcystein aus L-Cystin hergestellt, wobei gemäß einer Ausführungsform ein durch Acetylierung von Cystin erhältliches Reaktionsgemisch, das N-Acetylcystin enthält und zuvor auf pH 6 bis 7 eingestellt wurde, gleichzeitig elektroreduziert und elektrodialytisch entsalzt wird. Die hier zu verwendende Elektrolysezelle kann eine Graphitkathode und eine wasserstoffverzehrende Gasdiffusionsanode umfassen und enthält zwischen den Elektrolytkammern jeweils eine Ionenaustauschmembran. Als Anolyt wird eine Na-acetat-lösung, als Katholyt das N-Acetylcystin, Na-acetat und NaCl enthaltende Reaktionsgemisch eingesetzt. Die Wirtschaftlichkeit dieses Verfahrens wird heutigen Anforderungen nicht gerecht. Nach dem bekannten Verfahren unter Verwendung einer zwei Elektrolytkreisläufe und einer dazwischen angeordneten Kationenaustauschermembran umfassenden Elektrolysezelle und Einsatz eines alkalischen Anolyts reichert sich der Katholyt mit Na-Ionen an, was zu einem vermehrten Aufwand für die Entsalzung der Lösung bei der Isolation des Produkts nach Beendigung der elektrochemischen Umsetzung führt.

Aufgabe der Erfindung ist demgemäß, eine Elektrolysezelle mit einer Festbettelektrode im Elektrolytraum, einem Gasraum und einer dazwischen angeordneten Gasdiffusionelektrode aufzuzeigen, bei deren Verwendung die genannten Probleme in vermindertem Umfang auftreten oder vorzugsweise vollständig beseitigt sind.

Die Elektrolysezelle sollte sich insbesondere zur reduktiven Spaltung von organischen Verbindungen mit einer Disulfidbrücke eignen, insbesondere zur Herstellung von L-Cystein und Derivaten hiervon aus L-Cystin und Derivaten hiervon und Nachteile vorbekannter elektrolytischer Verfahren vermeiden.

Gefunden wurde eine Elektrolysezelle zur Durchführung chemischer Reaktionen, umfassend
einen mit elektrisch leitfähigen Füllkörpern gefüllten Elektrolytraum zur Aufnahme eines flüssigen Elektrolyten,
einen mit elektrisch leitfähigen Füllkörpern gefüllten Gasraum zur Aufnahme eines zu oxidierenden oder reduzierenden Gases,
eine zwischen dem Gasraum und Elektrolytraum angeordnete Gasdiffusionselektrode, welche elektrolytraumseitig mit einem ionenaustauschenden Separator in Verbindung steht,
Stromkollektoren (Kontaktierelemente) für die Gasdiffusionselektrode und die als Gegenelektrode fungierende Füllkörperfüllung im Elektrolytraum und Vorrichtungen zum Zu- und Abführen des Elektrolyten und des Gases, die dadurch gekennzeichnet ist, daß der ionenaustauschende Separator schichtförmig auf die Gasdiffusionselektrode aufgebracht worden ist durch ein Verfahren, umfassend ein- oder mehrmaliges Auftragen einer Lösung eines ionenaustauschenden Materials in einem Lösungsmittel auf die elektrokatalytisch wirksame Schicht der Gasdiffusionselektrode und Verdunsten des Lösungsmittels.

Gemäß einer bevorzugten Ausführungsform enthält die Elektrolysezelle als Gasdiffusionselektrode eine übliche wasserstoffverzehrende Gasdiffusionsanode (GD-Anode). Eine solche GD-Anode wird zum Zwecke der kathodischen Reduktion organischer oder anorganischer Verbindungen verwendet; bei der ionenaustauschenden Schicht handelt es sich in diesem Fall um eine Kationenaustauscherschicht. Zum Zwecke der Oxidation einer Verbindung wird in analoger Weise eine Elektrolysezelle mit einer sauerstoffverzehrenden Kathode, einer Anionenaustauscherschicht und einer Festbettanode verwendet.

Üblicherweise umfaßt eine Gasdiffusionselektrode eine porenförmige flexible elektrokatalytische Schicht und einen porenförmigen Stromkollektor mit einer Vielzahl von Kontaktpunkten. Gasseitig wird die GDE hydrophob, elektrolytseitig hydrophil ausgebildet. Die Katalysatorschicht basiert meistens auf Aktivkohle oder leitfähigem Ruß und mindestens einem Edelmetall in Verbindung mit Polytetrafluorethylen. Als Stromkollektor dienen meist Vliese aus pyrolysiertem Kohlenstoff oder/und Netze oder Gitter aus Platin oder einer Platinlegierung. Einzelheiten zum Aufbau von Gasdiffusionselektroden sind der Literatur - siehe zum Beispiel C. H. Hamann, W. Vielstich, Elektrochemie, 3. Aufl. 1998, Wiley VCH, 478 - zu entnehmen. Gasdiffusionselektroden sind auch im Handel erhältlich.

Es wurde gefunden, dass durch Befüllen des Gasraums mit Füllkörperpartikeln aus einem leitfähigen Material Stromabrisse und Leistungsminderungen, wie sie in konventionellen Zellen auftreten, vermeidbar sind. Durch das anodische Festbett wird eine selbstregulierende und kontakterhaltende Wirkung erzielt. Es wird angenommen, dass Bewegungen im kathodischen Festbett durch solche im anodischen Festbett kompensiert werden. Eine solche Kompensation ist möglich, wenn die GDE ausreichend flexibel angeordnet wird und Bewegungsimpulse von der einen Kammer auf die andere übertragen kann. Außer einem gegebenenfalls anwesenden feinen Metallnetz auf der hydrophoben Seite der GDE umfaßt der Stromkollektor der GDE das anodische Festbett und einen das Festbett begrenzenden oder in dieses hineinreichenden metallischen starren Stromabnehmer. Vorzugsweise wird dieser Stromabnehmer in Form eines das Festbett begrenzenden Metallnetzes oder einer Metallplatte ausgebildet. Als Füllkörper können geformte Partikel aus einem korrosionsbeständigen Metall, Metallegierung oder Kombination von Metallen, oder aus einem kohlenstoffhaltigen Material, insbesondere Graphit, eingesetzt werden. Zweckmäßigerweise sind die Partikel phärisch mit einem Durchmesser im Bereich von 0,5 bis 5 mm.

Das als Arbeitselektrode fungierende Festbett im Elektrolytraum besteht aus einer Schüttung von Partikeln aus einem leitfähigen Material mit für den Elektrolyten ausreichender Korrosionsbeständigkeit, wie insbesondere Graphit beliebiger Form, beispielsweise Kugel-, Sattel-, Ring- oder Stäbchenform. Die Form der Partikel ist so zu wählen, dass der Elektrolyt problemlos durch die Zwischenräume des Festbetts fließen kann. Angestrebt wird eine möglichst hohe volumenspezifische Oberfläche der Füllkörper bei möglichst geringem Druckverlust. Zweckmäßigerweise besteht das Festbett im Elektrolytraum und Gasraum aus Partikeln aus dem gleichen Material und vorzugsweise Partikeln der gleichen oder ähnlichen Form.

Die Kontaktierung der Festbettelektrode erfolgt mittels eines oder mehrerer in das Festbett reichenden leitfähigen und korrosionsbeständigen Kontaktierstäbe, wie Graphit oder Titan, oder mittels eines oder mehrerer im Festbett oder an der Wandung desselben angeordneten Kontaktiergitter oder Platten aus einem korrosionsbeständigen, gut leitfähigen Material, etwa einem Ventilmetall, wie Titan oder Tantal.

Erfindungswesentliches Merkmal ist die anspruchsgemäße Ausbildung der Ionenaustauscherschicht. Während unter Verwendung einer Ionenaustauschermembran der Strom bei konstanter Spannung mit der Betriebszeit rasch abnimmt, bleibt dieser bei der erfindungsgemäßen Ausbildung im wesentlichen konstant, da die Schicht weder flattert noch delaminiert, sondern einen intensiven und dauerhaften Kontakt zur Gasdiffusionselektrode gewährleistet. Dieser Effekt ist deutlich aus dem Vergleich der Beispiele mit den Vergleichsbeispielen zu erkennen.

Die Herstellung der ionenaustauschenden Schicht auf der Katalysatorschicht der GDE kann durch ein- oder mehrstufiges Beschichten erfolgen. Zur Beschichtung wird eine Lösung eines filmbildenden polymeren Ionenaustauschermaterials in einem geeigneten Lösungsmittel oder Lösungsmittelgemisch mittels üblicher Beschichtungstechniken, beispielsweise durch Gießen, Pinseln oder Rakeln, aufgetragen. Nach jedem Auftrag wird zumindest teilweise zwischengetrocknet, am Ende vollständig getrocknet. Insbesondere beim Auftrag der ersten Schicht ist Sorge zu tragen, daß die Lösung nicht zu tief in die Katalysatorschicht eindringt. Sofern die Katalysatorschicht selbst aus der Herstellung noch Lösungsmittel enthält, kann die Trocknung dieser Schicht mit der Ionenaustauscherschicht gemeinsam erfolgen.

Einsetzbar sind übliche organische Kationen- und Anionenaustauschermaterialien, soweit deren chemische Stabilität in der Elektrolysezelle unter den Betriebsbedingungen gewährleistet ist und das Polymere im Lösungsmittel eine für Beschichtungszwecke ausreichende Löslichkeit aufweist. Für Kationenaustauscherschichten sind Sulfonsäuregruppe enthaltende Fluorpolymere und -copolymere einsetzbar, wie Copolymere von Tetrafluorethylen mit CF₂=CF-O-CF₂-CF₂-SO₃H oder anderen fluorhaltigen polymerisierbaren Verbindungen mit Sulfonsäure-, Phosphonsäure- oder Carboxylgruppen. Derartige Kationenaustauschermaterialien sind im Handel erhältlich (z.B. Nafion® von DuPont und Flemion® von Asahi Glass). Auch Lösungen, zum Beispiel Nafion® in Alkohol, sind im Handel erhältlich. Bei den Copolymeren kann es sich auch um Produkte handeln, welche auf einer polymerisierbaren Säure, wie Acrylsäure, Maleinsäure, Fumarsäure oder Maleinsäureanhydrid, mit Styrol und/oder Divinylbenzol und/oder Trifluorethylen oder Tetrafluorethylen handeln. Unter den Materialien für die Herstellung anionenaustauschender Schichten kommen solche Systeme infrage, die handelsüblichen Anionenaustauschermembranen zugrundeliegen. Der Fachmann wird durch orientierende Versuche die Eignung des Materials unter den Elektrolysebedingungen testen.

Mit der Beschichtung der GDE mit einem polymeren Ionenaustauscherfilm werden flexible Systeme erhalten, die einen geringen elektrischen Widerstand aufweisen. Die Schichtdicke kann an das gewünschte System angepaßt werden. Im allgemeinen reicht eine 10 bis 50 um dicke Schicht aus, wohingegen handelsübliche Membranen meist wesentlich dicker sind. Durch die Beschichtung wird eine Delaminierung im Betrieb zuverlässig vermieden.

Gemäß einer weiteren Ausführungsform kann auf eine sehr dünne erfindungsgemäße Beschichtung zusätzlich eine sehr dünne Ionenaustauschermembran aufgelegt werden. In diesem Fall wirkt die Beschichtung als Haftungsgrund für die Membran, so dass ein Delaminieren während des Betriebs vermieden wird. Gemäß einer weiteren Ausführungsform kann das gelöste ionenaustauschende Material bereits während der Herstellung der katalytisch wirksamen Katalysatorschicht auf der Basis von zum Beispiel Platin/Aktivkohle beziehungsweise Ruß/Teflon® eingesetzt werden. Durch Verwendung einer sehr kleinen Menge des ionenaustauschenden Materials ist es möglich, die Poren im Katalysator offenzuhalten, gleichzeitig aber einen wirksamen Haftungsgrund für eine Membran zu schaffen.

Der Elektrolytraum kann als einfache Durchflußzelle oder derart ausgebildet werden, dass das Festbett als Rieselbettreaktor betrieben werden kann und dem über das Rieselbett rieselnden Elektrolyt ein Gas, das eine elektrochemisch oxidierbare oder reduzierbare Komponente enthält, entgegengeführt wird. Diese Ausführungsform eignet sich zur Reinigung von Gasen (vgl. EP-A 0 800 853). Bisher übliche Probleme mit einer Delamination der Austauschermembran treten nicht mehr auf - siehe Beispiel 3 und Vergleichsbeispiel 2.

Die erfindungsgemäße Zelle kann zur Oxidation oder Reduktion von im Elektrolyt gelösten organischen und anorganischen Stoffen verwendet werden. So lassen sich Verbindungen mit einer Disulfidbrücke, insbesondere L- und DL-Cystin und Derivaten davon, wie NN'-Diacetylcystin, gut durch Elektroreduktion in die entsprechenden Mercaptoverbindungen, im Falle von Cystin in Cystein, überführen. Wie zuvor schon ausgeführt, eignet sich die Elektrolysezelle auch zur Gasreinigung, wenn der Elektrolytkammer im Gegenstrom ein Elektrolyt und ein zu reinigendes Gas zugeführt werden.

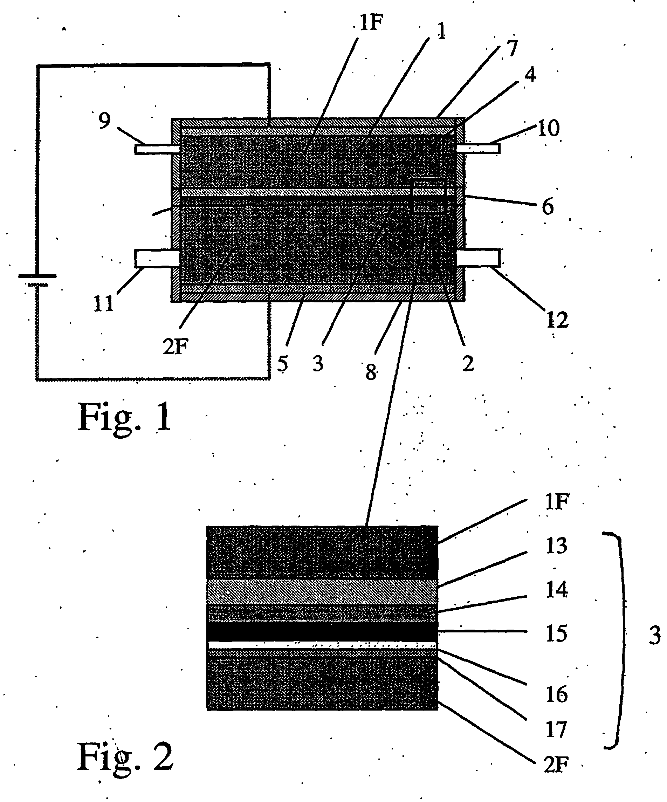

Figur 1 zeigt ein Schema einer bevorzugten Elektrolysezelle im Querschnitt, Figur 2 einen Ausschnitt in Vergrößerung. Die Zelle umfaßt eine vom Anodenrahmen 7 und dem die Gasdiffusionselektrode und Ionenaustauscher umfassenden Trennelement 3 gebildeten Gasraum 1 mit einem darin angeordneten Festbett 1F, ferner einen vom Kathodenrahmen 8 und dem Trennelement 3 gebildeten Elektrolytraum 2, der das Festbett 2F enthält. Die Rahmenteile 7 und 8 sind durch eine Dichtung 6 flüssigkeitsdicht und elektrisch isolierend miteinander verbunden. Der Rahmen 7 enthält je einen Stutzen 9 und 10 zum Zu- und Abführen des Gases; analog enthält der Rahmen 8 je einen Stutzen 11 und 12 zum Zu- und Abführen des Elektrolyts. Das Metallnetz 4 an der Hinterwand des Anolytraums dient der Kontaktierung des Festbetts 1F, die Metallplatte 5 an der Hinterwand des Katholytraums der Kontaktierung des Festbetts 2F; die mit diesen Kontaktierelementen verbundenen Kabel führen zur Spannungsquelle. Die Detailzeichnung Fig. 2 zeigt das Trennelement 3 und die angrenzenden Festbetten 1F und 2F. Das Trennelement 3 besteht aus einem feinen Netz 13, das der Abgrenzung des mittels Teflon® gebundenen porösen und hydrophoben Kohlenstoffvlieses 14 der GDE dient; auf dem Vlies befindet sich die Katalysatorschicht 15 der GDE, beispielsweise aufgebaut aus Aktivkohle beziehungsweise Ruß, Teflon® und Platin. Die durch Beschichtung auf die Katalysatorschicht 15 aufgebrachte Ionenaustauscherschicht 16 befindet sich zwischen der Katalysatorschicht 15 und einer Ionenaustauschermembran 17.

Die erfindungsgemäß bevorzugte Ionenaustauscherschicht erlaubt den Aufbau von Zellen mit hoher Lebensdauer, da das Trennelement aus der GDE und Ionenaustauscherschicht nebst gegebenenfalls anwesendem gasraumseitigen feinen Netz und elektrolytraumseitig auf die Ionenaustauscherschicht zusätzlich aufgebrachte Membran einen guten Kontakt zu den Festbetten im Gas- und Elektrolytraum ermöglicht. Die Trennschicht ist ausreichend flexibel und selbstregulierend, und daher kontakterhaltend. Der Aufbau des Gasraums ist einfach, da die Ausbildung von Kanälen im Rahmen entfällt. Durch die Ionenaustauscherschicht wird ein sicherer Schutz der Katalysatorschicht gewährleistet, und eine Delaminierung, wie sie in vorbekannten Zellen oft nach kurzer Betriebsdauer auftritt und zu Funktionsstörungen führt, nicht zu befürchten ist. Schließlich führt der erfindungsgemäße Ausbau zu einem geringen Spannungsabfall und damit zu einer höheren Wirtschaftlichkeit.

Ein speziell bei der Elektroreduktion von Cystin und Cystinderivaten in nicht-erfindungsgemäßen Zellen mit einer Ionenaustauschermembran auf der GDE auftretendes Problem, nämlich Diffusion der Aminosäure durch die Membran und Kristallisation auf deren Rückseite, wird durch Verwendung einer Zelle mit einer erfindungsgemäßen Ionenaustauscherschicht auf der GDE behoben - siehe Beispiele 1 und 2 und Vergleichsbeispiel 1. Weitere Vorteile sind:
- Wegfall des Anolytkreislaufs und damit Vereinfachung der Zelle und des Verfahrens;
- Einsparung von Energie durch Senkung der Zellspannung;
- bessere Kontrolle des Ionenhaushalts durch elektrochemische Bildung von Protonen und deren Eintrag in den alkalischen Katholyten.

### Beispiel 1: Herstellung von L-Cystein aus L-Cystin

Zellenaufbau: Die Zelle umfaßte einen Katholytraum, einen Gasraum und dazwischen eine GDE mit einer Kationenaustauscher-Beschichtung. Die verwendete Rundzelle wies eine GDE-Fläche von 19,6 cm² auf. Die Wasserstoffverzehr-Anode bestand aus einem hydrophilen Graphitvlies (Cloth A, Fa. E-Tek), auf welchem der Katalysator 10 % Pt auf Vulcan XC-72, Fa. E-Tek) vermischt mit PTFE-Suspension (Hostaflon® 60 % in Wasser, Fa. Hoechst) aufgebracht wurde. Auf die Katalysatorschicht wurde eine Lösung aus 20 Gew.-% Nafion® (DuPont) in Alkohol mit einer Beladung von etwa 0,3 g/cm² gegossen. Anschließend wurde der Verbund bei einer Temperatur von 100 °C getrocknet. Die fertige GDE mit Membranschicht wurde auf der Vliesseite mit einem Pt-Netz kontaktiert, auf das Pt-Netz wurden Graphitpartikel (3-4 mm von Conradty) gegeben. Darüber kam ein zweites Pt-Netz, welches den Strom auf das Anodensegment übertrug. Auf der gegenüberliegenden Seite der Membran befand sich der Kathodenraum, gefüllt mit Graphitpartikeln, d = 3-4 mm (Fa. Conradty) als Elektrode. Die Festbettelektrode wurde durch eine leitfähige Kontaktplatte kontaktiert. Dicke des anodischen Festbetts etwa 9 mm; Dicke des kathodischen Festbetts etwa 16 mm.

Versuchsdurchführung: In einem Kreislaufgefäß wurde die wäßrige Lösung vorgelegt. Die Lösung (Volumen: 250 ml) enthielt 132 g/l Cystin, 85 g/l NaOH. Die Lösung wurde mit einer Kreislaufpumpe in die Zelle gefördert. Von der Zelle gelangte die Lösung zurück in das Kreislaufgefäß. Aus dem Kreislaufgefäß wurden Proben gezogen, die mit der HPLC analysiert wurden. Die Zelle wurde über einen Gleichrichter galvanostatisch betrieben. Die Klemmenspannung wurde aufgezeichnet. Die Tabelle zeigt die Spannung und den Strom sowie die gemessene Konzentration von Cystin und Cystein.

| Dauer (h : mm) | Strom (A) | Spannung (V) | Konz. Cystin (g/l) | Konz. Cystein (g/l) |
|---|---|---|---|---|
| 0 | 0,5 | 1,32 | 131 | - |
| 1 : 10 | 2,0 | 2,49 | 109 | 44 |
| 1 : 30 | 1,5 | 1,97 | 103 | 55 |
| 3 : 10 | 1,5 | 2,5 | 62 | 86 |
| 6 : 55 | 1,0 | 2,5 | 32 | 131 |
| 7 : 25 | 1,0 | 2,44 | - | 133 |

Die Stromausbeute betrug 76 %; der Umsatz betrug 100 %; die Membranflächenzeitausbeute betrug 2,3 kg/(h*m²); der spezifische Energiebedarf betrug 0,79 kWh/kg

### Beispiel 2: Herstellung von N-Acetyl-L-cystein (AcCys) aus NN' -Diacetyl-L-cystin (Ac₂Cyss)

Der Zellenaufbau entsprach jenem des Beispiels 1 mit der Ausnahme, dass zur Ausbildung der Ionenaustauscherschicht die Nafionlösung (20 Gew.-%) in einer Menge von 0,3 g/cm² aufgetragen und unmittelbar danach ein 20 µm dicker polymerer Ionenaustauscherfilm (z.B. von Fa. Gore) aufgelegt wurde. Der Film verklebte mit der noch nicht getrockneten Beschichtung. Anschließend wurde der Verbund bei einer Temperatur von 100 °C getrocknet.

Die Versuchsdurchführung entsprach Beispiel 1. Eingesetzt wurde eine wäßrige Lösung, wie sie bei der Acetylierung nach Schotten-Baumann unter Einsatz von Acetanhydrid und Einstellung des pH-Werts auf etwa 7 erhalten wurde mit einem Gehalt von 254 g/l NN'-Diacetyl-L-cystin (Ac₂Cyss), 145 g/l Natriumacetat. Die Tabelle zeigt die Versuchsparameter.

| Dauer (h : min) | Strom (A) | Spannung (V) | Ac₂Cyss (g/l) | AcCys (g/l) | pH |
|---|---|---|---|---|---|
| 0 | 0,5 | 3,6 | 254 | - | 6,7 |
| 2 : 40 | 1,0 | 4,2 | 200 | 53 | 7,3 |
| 4 : 40 | 1,0 | 4,3 | 140 | 100 | 7,7 |
| 6 : 50 | 1,0 | 4,4 | 80 | 151 | 7,4 |
| 8 : 10 | 1,0 | 4,4 | 57,4 | 171 | 6,7 |
| 10 : 10 | 1,0 | 4,4 | 27,2 | 206 | 7,0 |
| 12 : 10 | 1,0 | 4,4 | 15,6 | 212 | 7,5 |

Die Stromdichte betrug 51 mA/cm², die Stromausbeute 60 %, der Umsatz 94 %, die Ausbeute an AcCys 84 %, die Membranflächenzeitausbeute betrug 1,8 kg/(h*m²), der spezifische Energiebedarf betrug 1,2 kWh/kg.

### Beispiel 3

Im Verfahren zur elektrochemischen Chlorgasreinigung gemäß EP 0 800 853 A wurde die Nafion®-Membran auf der wasserstoffverzehrenden Anode durch eine gemäß Beispiel 1 aufgebrachte erfindungsgemäße Nafion®-Beschichtung ersetzt. Das zu reinigende Abgas enthielt 0,1 Vol-% Chlor. Als Katholyt diente eine 0,5 M Salzsäure, welche über das kathodische Festbett rieselte.

Spannung: 2,56 V, Strom 10 A, A = 0,0252 m², Bettiefe = 6 cm, Gasdurchsatz 300 l, Berieselungsdichte 8 m³/(m²*h), Chlorabbau = 100 %. Mit dem gleichen Verbund wurden über einen Zeitraum von 4 Wochen kontinuierlich Versuche durchgeführt, ohne daß es zu einer Minderung der Reinigungsleistung kam oder der Stromverbrauch anstieg.

### Vergleichsbeispiel 1 (VB 1)

In der Rundzelle (A = 19,6 cm²) wurde eine GDE, verpreßt mit einer Membran (Nafion® 117) zur Umsetzung von Cystein aus Cystin verwendet. Wie in Beispiel 1 wurde ein Anodenfestbett verwendet.

### Versuchsbeispiel:

Spannung: 2,5 V; Stromdichte: 100 mA/cm²; Stromausbeute: 10 %; Umsatz: 10 %

Bei Versuchsende, nach der Demontage der Zelle konnte man erkennen, daß der Verbund beschädigt war. Zwischen der Nafion Membran und der GDE hatten sich Kristalle ausgebildet.

### Vergleichsbeipiel 2

Wie in Beispiel 3 beschrieben wurden Versuche mit einer "verpreßten" Einheit aus Nafion 117 Membran und GDE durchgeführt.

Spannung: 5,21 V, Strom 10 A, A = 0,0252 m², Bettiefe = 6 cm, Gasdurchsatz 300 1, Berieselungsdichte 8 m³/(m²*h), Chlorabbau = 100 %, Versuchsdauer ca. 8 h, Standzeit: Nach 8 h Stunden wurde die Zelle demontiert, da Spannung und Chlorabbau stetig schlechter wurden. Die Nafionmembran hatte sich von der GDE gelöst.

## Patentansprüche

1. Elektrolysezelle zur Durchführung chemischer Reaktionen, umfassend
einen mit elektrisch leitfähigen Füllkörpern gefüllten Elektrolytraum zur Aufnahme eines flüssigen Elektrolyten,
einen mit elektrisch leitfähigen Füllkörpern gefüllten Gasraum zur Aufnahme eines zu oxidierenden oder reduzierenden Gases,
eine zwischen dem Gasraum und Elektrolytraum angeordnete Gasdiffusionselektrode, welche elektrolytraumseitig mit einem ionenaustauschenden Separator in Verbindung steht,
Stromkollektoren für die Gasdiffusionselektrode und die als Gegenelektrode fungierende Füllkörperfüllung im Elektrolytraum und Vorrichtungen zum Zu- und Abführen des Elektrolyten und des Gases,
**dadurch gekennzeichnet,**
**daß** der ionenaustauschende Separator auf die Gasdiffusionselektrode aufgebracht worden ist durch ein Verfahren, umfassend ein- oder mehrmaliges Auftragen einer Lösung eines ionenaustauschenden Materials in einem Lösungsmittel auf die elektrokatalytisch wirksame Schicht der Gasdiffusionselektrode und zumindest teilweises Verdunsten des Lösungsmittels nach jeder Beschichtung.

2. Elektrolysezelle nach Anspruch 1,
**dadurch gekennzeichnet,**
**daß** die Gasdiffusionselektrode eine wasserstoffverzehrende Anode oder sauerstoffreduzierende Kathode und die ionenaustauschende Schicht im Falle einer Gasdiffusionsanode Kationen und im Falle einer Gasdiffusionskathode Anionen austauscht.

3. Elektrolysezelle nach Anspruch 2,
**dadurch gekennzeichnet,**
**daß** auf der durch Beschichten aufgebrachten ionenaustauschenden Schicht eine Ionenaustauschermembran aus dem gleichen oder gleichwirkenden Material angeordnet ist.

4. Elektrolysezelle nach einem der Ansprüche 1 bis 3,
**dadurch gekennzeichnet,**
**daß** der Gasraum und der Elektrolytraum als Füllkörper Graphitpartikel enthalten.

5. Elektrolysezelle nach einem der Ansprüche 1 bis 4,
**dadurch gekennzeichnet,**
**daß** sie eine wasserstoffverzehrende Gasdiffusionselektrode enthält und die Kationenaustauscherschicht auf einem Sulfonsäuregruppen enthaltenden Fluorpolymeren oder Fluorcopolymeren basiert.

6. Elektrolysezelle nach einem der Ansprüche 1 bis 5,
**dadurch gekennzeichnet,**
**daß** die Stromkollektoren an der Hinterwand des Gasraumes und an der Hinterwand des Elektrolytraums in Form von korrosionsbeständigen Metallnetzen oder -platten ausgebildet sind.

7. Elektrolysezelle nach einem der Ansprüche 1 bis 6,
**dadurch gekennzeichnet,**
**daß** der Elektrolytraum außer den Vorrichtugnen zum Zuund Abführen des flüssigen Elektrolyten Vorrichtungen zum Zu- und Abführen eines eine zu reduzierende oder oxidierende Komponente enthaltenden Gases enthält,
wobei die Anordnung der Vorrichtungen zum Zu- und Abführen des Elektrolyten und des Gases einen Betrieb des mit Füllkörpern gefüllten Elektrolytraums als Rieselbettreaktor ermöglicht.

8. Verwendung der Elektrolysezelle nach einem der Ansprüche 1 bis 7 zur Oxidation oder Reduktion von im Elektrolyt gelösten organischen oder anorganischen Bestandteilen.

9. Verwendung nach Anspruch 8,
wobei unter Einsatz einer wasserstoffverzehrenden Anode und einer kationenaustauschenden Schicht L- oder DL-Cystin oder Derivate davon zu L- oder DL-Cystein oder Derivaten davon reduziert werden.

10. Verwendung nach Anspruch 8, wobei unter Einsatz einer Elektrolysezelle gemäß Anspruch 7 ein eine oxidierbare oder reduzierbare Komponente enthaltendes Gas von diesen Komponenten befreit wird.

## Claims

1. Electrolytic cell for the performance of chemical reactions, comprising
an electrolyte chamber filled with electrically conductive packing to take up a liquid electrolyte,
a gas space filled with electrically conductive packing to take up a gas for oxidation or reduction,
a gaseous diffusion electrode positioned between the gas space and electrolyte chamber, which is connected to an ion-exchanging separator on the electrolyte chamber side,
current collectors for the gaseous diffusion electrode and the packing filling acting as counterelectrode in the electrolyte chamber and devices to supply and remove the electrolyte and the gas,
**characterised in that**
the ion-exchanging separator was applied to the gaseous diffusion electrode by a process comprising single or multiple application of a solution of an ion-exchanging material in a solvent to the electrocatalytically active layer of the gaseous diffusion electrode and at least partial evaporation of the solvent after each coating operation.

2. Electrolytic cell according to claim 1,
**characterised in that**
the gaseous diffusion electrode is a hydrogen-consuming anode or an oxygen-reducing cathode and the ion-exchanging layer exchanges cations if it is a gaseous diffusion anode and anions if it is a gaseous diffusion cathode.

3. Electrolytic cell according to claim 2,
**characterised in that**
an ion-exchange membrane made from the same material or a material having the same effect is provided on the ion-exchanging layer applied by coating.

4. Electrolytic cell according to one of claims 1 to 3,
**characterised in that**
the gas space and the electrolyte chamber contain graphite particles as packing.

5. Electrolytic cell according to one of claims 1 to 4,
**characterised in that**
it contains a hydrogen-consuming gaseous diffusion electrode and the cation-exchange layer is based on a fluoropolymer or fluorocopolymer containing sulfonic acid groups.

6. Electrolytic cell according to one of claims 1 to 5,
**characterised in that**
the current collectors on the rear wall of the gas space and on the rear wall of the electrolyte chamber are designed in the form of corrosion-resistant metal meshes or plates.

7. Electrolytic cell according to one of claims 1 to 6,
**characterised in that**,
in addition to the devices to supply and remove the liquid electrolyte, the electrolyte chamber contains devices to supply and remove a gas containing a component to be reduced or oxidised, whereby the arrangement of the devices to supply and remove the electrolyte and the gas allows the electrolyte chamber filled with packing to be operated as a trickle-bed reactor.

8. Use of the electrolytic cell according to one of claims 1 to 7 for the oxidation or reduction of organic or inorganic components dissolved in the electrolyte.

9. Use according to claim 8,
whereby L or DL cystine or derivatives thereof can be reduced to L or DL cysteine or derivatives thereof using a hydrogen-consuming anode and a cation-exchanging layer.

10. Use according to claim 8, whereby a gas containing an oxidisable or reducible component is freed from these components using an electrolytic cell according to claim 7.

## Revendications

1. Cellule d'électrolyse pour effectuer des réactions chimiques comprenant:
- une chambre à électrolyte pour accueillir un électrolyte liquide, garnie de corps de remplissage conducteurs de l'électricité,
- une chambre à gaz pour accueillir un gaz à oxyder ou à réduire, garnie de corps de remplissage conducteurs de l'électricité,
- entre la chambre à électrolyte et la chambre à gaz, une électrode à diffusion de gaz qui, du côté de la chambre à électrolyte, est en relation avec un séparateur, échangeur d'ions;
- des collecteurs électriques pour l'électrode à diffusion de gaz et pour les corps de remplissage servant de contre-électrode dans la chambre à électrolyte, ainsi que des dispositifs pour amener et évacuer l'électrolyte et le gaz,
**caractérisée en ce que**
le séparateur échangeur d'ions a été déposé sur l'électrode à diffusion de gaz par un procédé comportant le dépôt en une ou plusieurs fois d'une solution d'un matériau échangeur d'ions dans un solvant, sur la couche électrocatalytiquement active de l'électrode de diffusion de gaz, suivie d'une vaporisation au moins partielle du solvant après chaque dépôt.

2. Cellule électrolytique selon la revendication 1,
**caractérisée en ce que**
l'électrode à diffusion de gaz est une anode à consommation d'hydrogène ou une cathode à réduction d'oxygène et la couche échangeuse d'ions échange des cations ou des anions selon que l'électrode à diffusion de gaz est une anode ou une cathode.

3. Cellule électrolytique selon la revendication 2,
**caractérisée en ce que**
sur la couche échangeuse d'ions déposée est placée une membrane échangeuse d'ions faite du même produit ou d'un produit ayant le même effet.

4. Cellule électrolytique selon la revendication 1 à 3,
**caractérisée en ce que**
la chambre à gaz et la chambre à électrolyte contiennent, comme corps de remplissage, des particules de graphite.

5. Cellule électrolytique selon la revendication 1 à 4,
**caractérisée en ce que**
elle contient une électrode à diffusion de gaz consommant de l'hydrogène et la couche échangeuse de cations est à base de groupes sulfoniques contenant des polymères fluorés ou des copolymères fluorés.

6. Cellule électrolytique selon la revendication 1 à 5,
**caractérisée en ce que**
les collecteurs électriques sont réalisés sur la paroi arrière de la chambre à gaz et sur la paroi arrière de la chambre à électrolyte, sous la forme de réseaux ou de plaques métalliques résistants à la corrosion.

7. Cellule électrolytique selon la revendication 1 à 6,
**caractérisée en ce que**
la chambre à électrolyte, en plus des dispositifs d'amenée et d'évacuation de l'électrolyte liquide, contient des dispositifs pour amener et évacuer un gaz présentant des composants à réduire ou à oxyder, l'ensemble de ces dispositifs permettant à la chambre à électrolyte garnie de corps de remplissage, de fonctionner comme un réacteur à lit de ruissellement.

8. Utilisation de la cellule d'électrolyse selon une des revendications 1 à 7,
pour oxyder ou réduire des composants organiques ou anorganiques dissous dans l'électrolyte.

9. Utilisation selon la revendication 8,
**caractérisée en ce que**
au moyen d'une anode à consommation d'hydrogène ou d'une couche échangeuse d'ions, on réduit de la L-ou DL-cystine ou des dérivés de celle-ci en L- ou DL-cystéine ou en des dérivés de celle-ci.

10. Utilisation selon la revendication 8,
**caractérisée en ce que**
au moyen d'une cellule d'électrolyse selon la revendication 7, dans laquelle un gaz contenant des composants oxydables ou réductibles est débarrassé de ces composants.
